# EUROPEAN PATENT SPECIFICATION

(11) **EP 4 351 348 B1**
(45) Date of publication and mention of the grant of the patent: **29.01.2025**
(21) Application number: 22733036.2
(22) Date of filing: 09.06.2022
(51) Int. Cl.: A23C 1/16, A23L 2/10, A23L 2/84, A23L 5/20, A23L 11/00, A23L 11/30

(54) **A HYDROLYZED WHOLE COCONUT PRODUCT, USEFUL FOR EXAMPLE, AS A BEVERAGE OR AS A POWDER FOR DESERTS AND COOKING**
HYDROLYSIERTES GANZES KOKOSNUSSPRODUKT ZUR MÖGLICHEN VERWENDUNG ALS GETRÄNK ODER ALS PULVER FÜR DESSERTS UND ZUM KOCHEN
PRODUIT DE NOIX DE COCO ENTIÈRE HYDROLYSÉE, UTILE PAR EXEMPLE, COMME BOISSON OU COMME POUDRE POUR LES DESSERTS ET LA CUISINE

(30) Priority: 11.06.2021 EP 21179066
(43) Date of publication of application: 17.04.2024
(73) Proprietor: Société des Produits Nestlé S.A., 1800 Vevey (CH)
(72) Inventor: WAING, Seinn Lae, Singapore 640457 (SG); ANANTA, Edwin, 1066 Epalinges (CH); TAN, Ching Theng, Bahru, 81200 (MY); DING, Xian Qiao, Singapore 821310 (SG); MOCCAND, Cyril, 1132 LULLY (CH)
(74) Representative: Dinger, Hansjörg
(86) International application number: PCT/EP2022/065670
(87) International publication number: WO 2022/258746

(56) References cited:
- WO-A1-2020/239521
- US-A1- 2005 100 645
- US-A1- 2018 155 659
- ALCANTARA J A ET AL: "ENZYMATIC HYDROLYSIS OF COCONUT MEAT PRODUCTS", PHILIPPINE JOURNAL OF COCONUT STUDIES, PHILLIPINE COCONUT RESEARCH AND DEVELOPMENT FOUNDATION, MANILA, PH, vol. 3, no. 2, 1 January 1978 (1978-01-01), pages 45 - 50, XP008042815, ISSN: 0115-6500
- SUDEEP P. GEORGE ET AL: "A novel thermostable xylanase from Thermomonospora sp.: influence of additives on thermostability", BIORESOURCE TECHNOLOGY, vol. 78, no. 3, 1 July 2001 (2001-07-01), pages 221 - 224, XP055056852, ISSN: 0960-8524, DOI: 10.1016/S0960-8524(01)00029-3
- RICHARDSON TOBY H ET AL: "A novel, high performance enzyme for starch liquefaction. Discovery and optimization of a low pH, thermostable alpha-amylase", JOURNAL OF BIOLOGICAL CHEMISTRY, AMERICAN SOCIETY FOR BIOCHEMISTRY AND MOLECULAR BIOLOGY, US, vol. 277, no. 29, 19 July 2002 (2002-07-19), pages 26501 - 26507, XP002570953, ISSN: 0021-9258, [retrieved on 20020506], DOI: 10.1074/JBC.M203183200

## Description

The present invention relates generally to the field of food and beverages. In particular, the present invention relates to a process to prepare a hydrolyzed coconut product . The hydrolyzed coconut product may be prepared by a process comprising an enzymatic hydrolysis of coconut kernels and the liquefaction of the coconut kernels. The process of the present invention comprises the steps of enzymatically hydrolyzing grated coconut kernels; liquefying the coconut kernels; and spray drying the hydrolyzed and liquefied coconut kernels. Advantageously, the subject matter of the present invention allows it, for example, to use unprocessed coconut kernels rather than coconut milk and coconut flour to prepare the hydrolyzed coconut product.

Powdered coconut milk is used today worldwide in the preparation many dishes, for example, Asian or Asian-like dishes. Natural coconut milk comprises a lot of coconut fat and sugars, which makes it difficult to industrially process and dry, particularly to spray dry, it into a dry, smooth and non-sticking powder. So typically, coconut milk has about 15-55% fat content. For rendering coconut milk more spray-dryable, several solutions have been proposed, some of which are presently used industrially. For example, GB 1'144'256 describes the use and addition of specifically selected emulsifiers to coconut milk in order to facilitate spray drying. CN107348413 describes the use of casein protein, maltodextrin and sodium citrate for facilitating spray drying.

US2005/100645 A1 describes a production process of vegetable foods from coconuts comprises fermenting pulverized pressed cake by mashing with water to create pumpable pulp added with enzyme preparation, and isolating coconut meal by homogenization, and pasteurization.

Modern consumers are more and more averse to artificial ingredients, such as artificial emulsifiers and maltodextrin, and other ingredients not familiar to them.

WO2020239521 describes in this respect a coconut milk powder comprising coconut milk and coconut flour, wherein the powder is a spray-dried powder. The powder may consist of coconut milk and coconut flour. The powder may further be free from maltodextrin.

Still the use of coconut milk and coconut flour as raw materials is relatively expensive and can lead to sandiness perception on the sensory dimension. Also, the inventors aim to provide a hydrolyzed coconut product which can be used for cooking and which has an excellent taste- and texture profile, is not overly processed, has very good energy balance in production, valorizes raw materials as much as possible and is economically reasonable to produce.

Hence, there is a clear need in the art and industry to find alternatives and better solutions for producing hydrolyzed coconut products.

Any reference to prior art documents in this specification is not to be considered an admission that such prior art is widely known or forms part of the common general knowledge in the field.

The objective of the present invention is to enrich or improve the state of the art and in particular to provide a hydrolyzed coconut product that can be used for cooking, baking and deserts, that has an excellent taste and texture profile, uses little energy and/or generates little CO₂ during production, largely valorizes raw materials and is economically reasonable to produce and a process to produce such a product, or to at least provide a useful alternative to solutions existing in the art.

The inventors were surprised to see that the objective of the present invention could be achieved by the subject matter of the independent claims. The dependent claims further develop the idea of the present invention.

Accordingly, the present invention provides a process for making a dried coconut powder in accordance with the present invention, the process comprising the steps of enzymatically hydrolyzing grated coconut kernels; liquefying the coconut kernels; and spray drying the hydrolyzed and liquefied coconut kernels, wherein the enzymatic hydrolysis is carried out by an amount of 0.1% weight to 8 weight-% , preferably from 0.3 to 2 weight-% on a wet basis of a combination of enzymes selected from the group consisting of cellulases, mannanases, beta-glucanases and xylanases.

As used in this specification, the words "comprises", "comprising", and similar words, are not to be interpreted in an exclusive or exhaustive sense. In other words, they are intended to mean "including, but not limited to".

The present inventors were surprised to see that the subject matter of the present invention allows it to
- reduce the costs of production of a coconut product as compared to the production of a coconut product based on coconut milk and coconut flour
- avoid overprocessing by using unprocessed ingredients which saves processing energy and CO₂ for the extraction of coconut milk
- almost completely valorize coconut kernels avoiding unnecessary raw materials losses
- replace maltodextrin by enzymatic hydrolysis of intrinsic coconut fibers which are then used as a carrier for spray drying
- achieve a very pleasant taste and mouthfeel as compared to the combination of coconut milk and coconut flour which can result in the perception of sandiness inside the mouth during consumption.

Figure 1 shows a comparison of a typical recipe of a coconut milk-flour slurry in accordance with the prior art versus a typical recipe of the enzymatically hydrolyzed grated coconut kernels in accordance with the present invention.

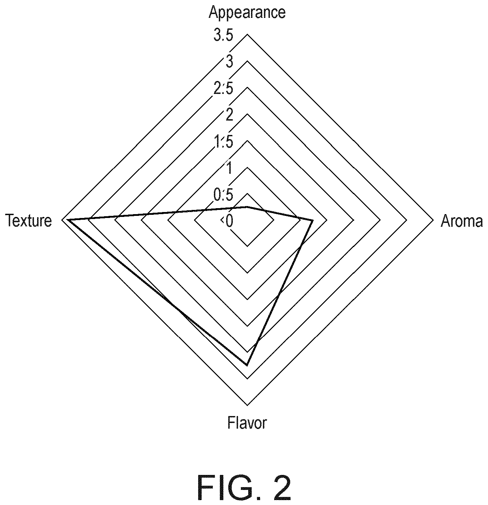

Figure 2 shows a sensory analysis of enzymatically hydrolyzed coconut milk in accordance with the present invention as compared to a coconut milk and flour slurry in accordance with the prior art (referred to as 0).

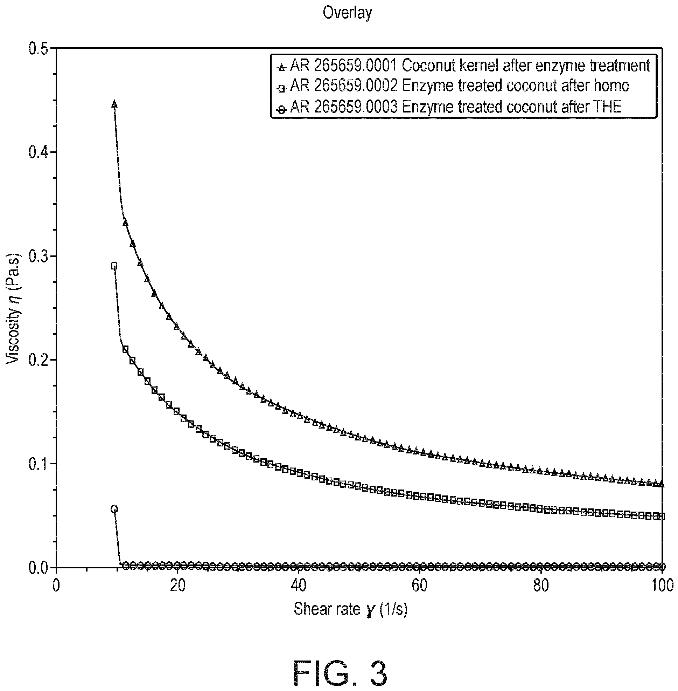

Figure 3 shows the shear-dependent viscosity of enzymatically hydrolyzed coconut kernels in accordance with the present invention after a 50-minute treatment (triangles), after homogenization (squares) and heat treatment (circles), expressed in Pascal-second.

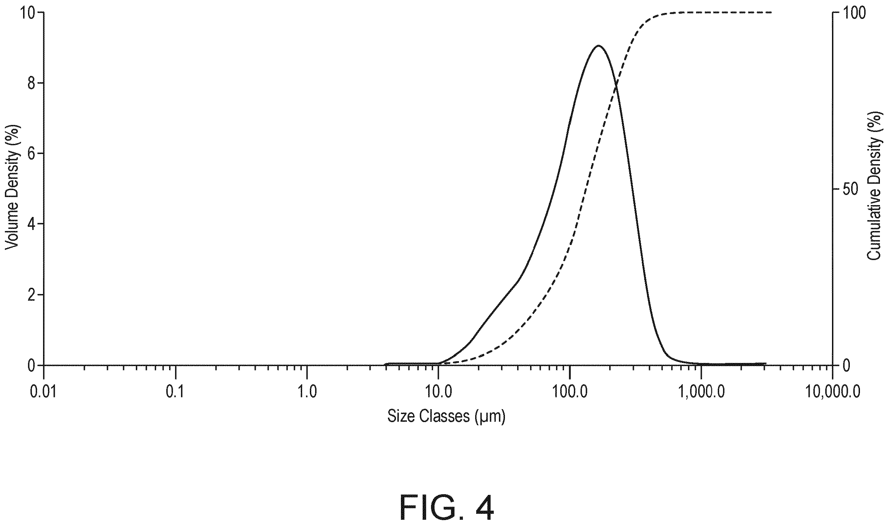

Figure 4 shows the particle size distribution of enzymatically hydrolyzed coconut kernels in accordance with the present invention after spray drying.

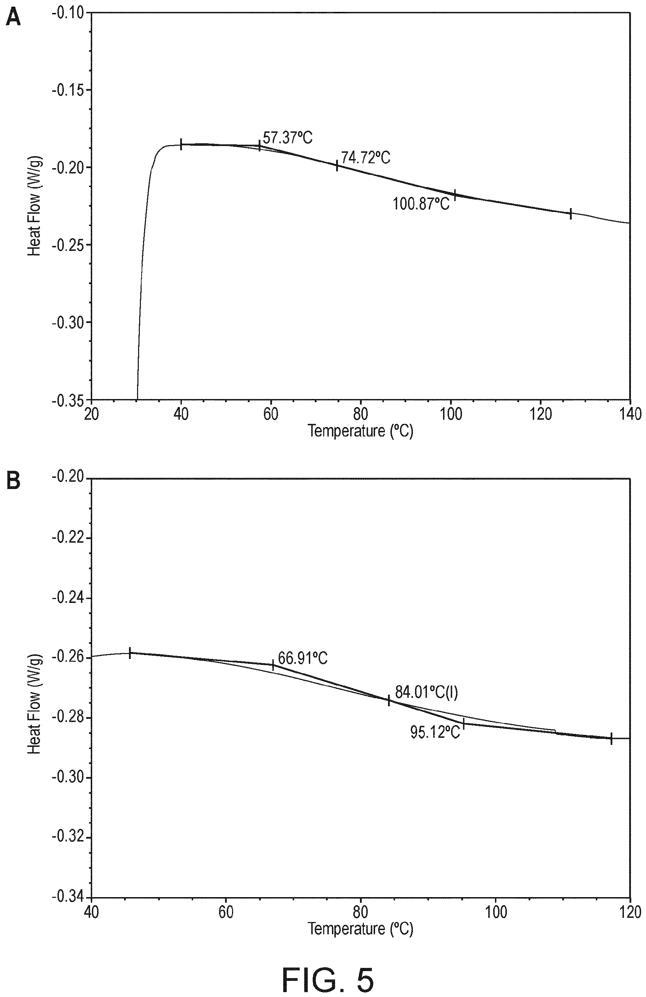

Figure 5 shows the glass transition temperature of coconut milk powder in accordance with the prior art (A) as compared to enzymatically hydrolyzed coconut kernels in accordance with the present invention (B) after spray drying.

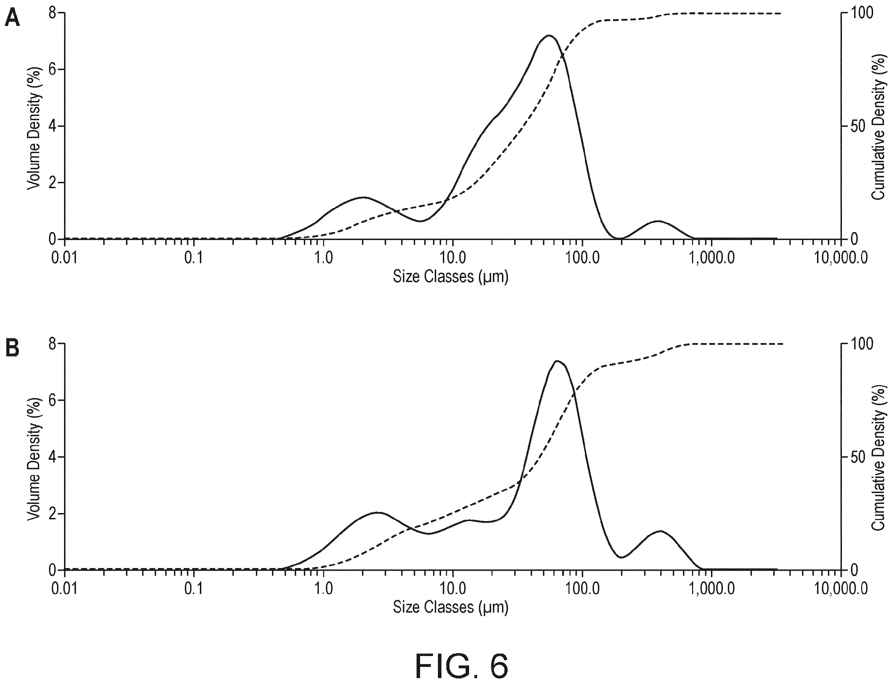

Figure 6 shows the particle distribution of enzymatically hydrolyzed coconut kernels in accordance with the present invention using various raw materials, namely chilled grated coconut from (A) Heng Guan (Singapore) and from (B) Jia Jia Wang (Singapore) after 50 minutes of hydrolysis.

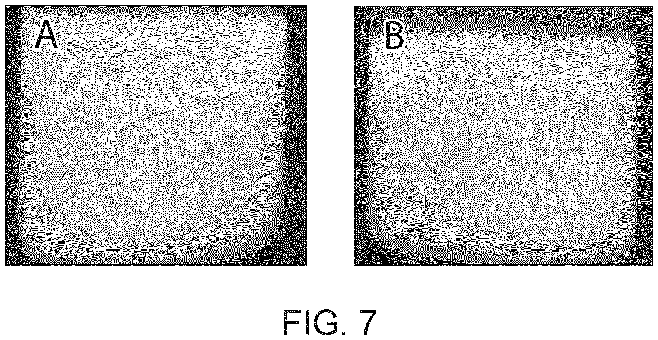

Figure 7 shows the stability of (A) a hydrolyzed coconut kernel powder in accordance with the present invention which was reconstituted in water at 10% wt after a 5-minute incubation at room temperature as compared to (B) a commercial product made with coconut milk. In both cases, sodium caseinate was used as an emulsifier and buffering salts were added before drying. No dephasing was observed in both cases.
Figure 8 shows a picture of a comparison example using only Rohalase^{®} (mannase) for enzymatic hydrolysis of coconut kernels. The viscosity of this obtained product is too viscous for spry drying.
Figure 9 shows a picture of a comparison example using only FoodPro^{®} (enzyme combination of beta gluconase, xylanase and cellulase) for enzymatic hydrolysis of coconut kernels. The viscosity of this obtained product is too viscous for spray drying.
Figure 10 shows a picture of enzymatically hydrolyzed coconut kernels in accordance with the present invention before spray drying. With an enzymatic combination of Rohalase^{®} (mannase) and FoodPro^{®} (enzyme combination of beta gluconase, xylanase and cellulase) a desired viscosity for spry drying can be achieved.

For example, the product obtained by the process of the present invention showed the above-described unexpected benefits when compared to coconut powder of the prior art made from coconut milk and coconut flour.

The term 'coconut milk' refers to the liquid that comes from a grated pulp of a mature coconut. Coconut milk is a traditional food ingredient consumed mostly in South and Southeast Asia, the Caribbean and South America. Coconut milk typically has about 15-40 weight-% (weight per-cent) fat, 1-5 weight-% (weight per-cent) proteins, and zero to a neglect-able amount of insoluble fibers.

The term 'coconut flour' refers to the soft flour made from the coconut pulp left-over after the production of coconut milk. It is the protein- and fiber-rich by-product of the coconut milk production. Typically, coconut flour is dried and in powder form. Coconut flour is gluten-free and it is free from wheat and other grains. Typically, coconut flour has about 5-25 weight-% (weight per-cent) fat, 5-20 weight-% (weight per-cent) proteins, 15-50 weight-% (weight per-cent) insoluble fibers, and a moisture content of up to 10 weight-% (weight per-cent).

The process of the present invention allows it to use largely unprocessed coconut kernels as starting material, which may be coarsely ground. As coconut kernels are far less expensive that coconut milk and coconut flour, the product of the present invention can be more cost effective than prior art products.

Typically, the process of the present invention may use coconut kernels as starting material which are pre-treated by dehusking the coconuts exocarp, mesocarp and endocarp. In addition, a testa removal may be carried out. Further, the resulting coconut kernels may be grated to a particle size in the range of about 1-2 cm and a thickness in the range of about 1-1.5 mm.

Hence, in a preferred embodiment of the present invention the process of the present invention use grated coconut kernels as a starting material, for example grated coconut kernels with a particle size in the range of about 1-2 cm and a thickness in the range of about 1-1.5 mm.

Avoiding to use more processed ingredients such as coconut milk and coconut flour as staring material also allows it to save processing energy and CO₂ emissions.

As the whole coconut is used for the process of the present invention, the coconut is completely valorized. If the coconut is pre-treated by dehusking the coconuts exocarp, mesocarp and endocarp and by testa removal, no more plant material is not used than one would also not consume if one eats a coconut as it is. Unnecessary raw material losses are avoided.

Remarkably, many powdered coconut products contain maltodextrin. By using the whole coconut and by enzymatically treating the coconut, the present inventors were surprised to see that the addition of maltodextrin can be partially or completely avoided. Without wishing to be bound by theory, the inventors presently believe that the enzymes hydrolyse the intrinsic coconut fibers, which then in turn can be used as a carrier for spray drying.

Even further, remarkably, the product obtained by the process of the present invention was found to achieve a significantly improved taste and texture profile than prior art compositions. For example, a more intense sweetness, coconut aroma and the absence of a sandy texture is observed in the product of the present invention and when using the process of the present invention. Without wishing to be bound by theory, the inventors currently believe that this is at least in part achieved by avoiding the use of coconut flour.

Typically, the product obtained of the process of the present invention can be used to replace coconut milk, possibly after reconstitution in liquids. As such, the product may be used in hot and cold soups, currys, creams, custards, fillings, coconut-based deserts or ice-creams for example.

The inventors have obtained very good results, when the enzymatic hydrolysis was carried out by a mix of enzymes comprising at least one mannanase and at least one cellulase, preferably a combination of at least one mannanase and at least one cellulase . For example, enzymes with endo-beta-1,4-mannanase activity and/or endo-beta-1,4-glucanase activity may be used, preferably enzymes with endo-beta-1,4-mannanase activity and endo-beta-1,4-glucanase activity may be used. Further useful are enzymes with beta-glucanase and/or xylanase activity, preferably enzymes with beta-glucanase and xylanase activity. For example, the inventors have obtained good results with ROHALASE^{®} GMP and with FoodPro^{®}, both commercially available from specialist suppliers (AB Enzymes, Darmstadt, Germany and DuPont Industrial Biosciences, Brabrand, Denmark; respectively).

In accordance with the present invention the hydrolysis and the liquefaction of the coconut kernels may be carried out sequentially and/or simultaneously.

There is an industrial advantage of drying large quantities of an aqueous food composition by spray drying as it allows drying of very large quantities of materials at large scale and under acceptable economic conditions. So far, spray drying of high-fat containing aqueous food compositions was difficult and the use of maltodextrin or starch as a carrier for the spray drying was considered necessary.

The inventors of WO2020239521 have found that maltodextrin or starch can be entirely replaced by coconut flour, which allows to readily spray-dry high-fat containing liquids such as coconut milks.

The inventors of the present invention now propose to hydrolyze coconut kernels. The inventors believe that the hydrolyzed coconut fibers that are already present in the whole coconut kernel will serve well as a carrier material for spray drying, avoiding the need for maltodextrin or for coconut flour.

Hence, in one embodiment of the present invention, the dried coconut powder is free from maltodextrin and/or starch.

In one advantageous embodiment of the present invention the dried coconut powder is made from unprocessed grated coconut kernels. Advantageously, the grated coconut kernels may be steamed in order to stabilize the grated coconut and/or to increase its storage time.

After hydrolysis the dried coconut powder, may have a particle size distribution after hydrolysis of 1 to 1000 µm, 10 to 900 µm, 10 to 800 µm, 10 to 700 µm, 10 to 600 µm, 10 to 500 µm, 10 to 400 µm, 10 to 300 µm, 10 to 200 µm, or 10 to 100 µm.

Additionally or alternatively, the dried coconut powder in accordance with the present invention, may have a particle size with a D90 value of less than 1000 µm, less than 900 µm, less than 800 µm, less than 700 µm, less than 600 µm, less than 500 µm, less than 400 µm, less than 300 µm, less than 200 µm, or less than 100 µm. D90 means that 90% of the particles are smaller than this value.

Particle size and particle size distribution is measured according to ISO 13320:2009.

The following emulsifiers may be used: sodium caseinate, acacia gum, xanthan gum, guar gum, lecithins, monoglycerides, plant proteins such as pea proteins, soy proteins, faba proteins, rice proteins, pectins such as sugar beet pectin, citrus pectin, apple pectin, saponins. In a preferred embodiment, the emulsifier may be selected from the group consisting of sodium caseinate or pea protein.

Alternatively or additionally the following acidity regulators may be used: trisodium phosphate, sodium bicarbonate, potassium carbonate, calcium hydroxide. In a preferred embodiment, the acidity regulator may be selected from the group consisting of trisodium phosphate or sodium bicarbonate.

Additionally or alternatively, the hydrolyzed coconut product in accordance with the present invention, for example in liquid form, may have a viscosity in the range of 50 to 300 cP, for example 100-200 cP. The cP can be recalculated to 1 cP = 10⁻³ Pa·s. In an embodiment the hydrolyzed coconut product in accordance with the present invention, for example in liquid form, may have a viscosity in the range of 0.05 to 0.3

Pa·s, for example 0.1-0.2 Pa·s. Viscosity is measured according to ISO 11443:2021 using capillary and slit-die rheometers (device: TA AR 2000EX Advanced Rheometer)

The dried coconut powder in accordance with the present invention may have a coconut fat dry weight content from 25-85 weight-%, preferably from 35-75 weight-%, more preferably from 55-70 weight-%; a protein dry weight content in the range of 1 weight-% to 10 weight-%, preferably from 3 to 9 weight-% and a coconut fiber dry weight content from 1 to 10 weight-%, preferably from 2 to 6 weight-%.

For the purpose of the present invention the term "weight-%" always refers to "% of dry weight", unless indicated otherwise.

The fiber present in dried coconut powder may comprise at least 90 weight-% soluble fiber, for example at least 95 weight-% soluble fiber.

The fiber content of the composition of the present invention appears to be essential for example for the spray drying properties of the product of the present invention.

The composition of the present invention may also comprise added fiber, for example selected from the group consisting of pectins, citrus fibers, apple fibers, acacia gum, xanthan gum, guar gum or combinations thereof. The added fiber may be used, for example, to stabilize the emulsion before drying

It is preferred, that the composition of the present invention contains as little fiber added from other sources as possible. Hence, in one embodiment of the present invention, the dried coconut powder comprises fiber only from coconut. In one further embodiment of the present invention, the dried coconut powder comprises no added fiber.

The moisture content of the composition of the present invention, in particular when the composition is in powder form, is important. A too high water content will have negative consequences for storage times and powder properties, while a too low water content may have negative consequences for the reconstitution of the powder in liquids. Accordingly, the inventors propose that the dried coconut powder in accordance with the present invention may have a moisture content in the range of 0. weight-% to 10 weight-%, preferably from 0.5 to 3 weight-%.

As consumers expect a coconut product to have a very high coconut content, the dried coconut powder of the present invention may comprise at least 90 weight-% coconut, at least 95 weight-% coconut, at least 98 weight-% coconut, or may consist of coconut.

Features described for the product of the present invention above may apply and may be combined with features described for the process of the present invention.

The enzymatic hydrolysis may be carried out by an amount of 0.1% weight to 8 weight-% , preferably from 0.3 to 2 weight-% on a wet basis of an enzyme or an enzyme mixture. The enzyme or the enzyme mixture may be selected from a comination of the group consisting of cellulases, mannanases, beta-glucanases and xylanases, , preferably the enzyme mixture is a combination of cellulases, mannanases, beta-glucanases and xylanases,.

The hydrolysis may be carried out for a time range of about 20 minutes to 5 hours; and at a temperature in the range of about 40 to 70°C.

It may be advantageous, if the enzyme or the enzyme mixture is deactivated after hydrolysis. For example, the enzyme or the enzyme mixture may be deactivated after the hydrolysis by thermal treatment. The deactivation may be carried out in a batch system or in a continuous system. Such a thermal treatment may be carried out, for example, for about 10 minutes at 85°C in a batch system, or for about 20 seconds at 90°C, preferably 5 seconds at 84°C in a continuous system.

It may be preferred if the hydrolyzed coconut kernels are liquefied. Such a liquefication may be carried out by enzymatic treatment, for example, and may be carried out after the hydrolyzing the coconut kernels and/or simultaneously while hydrolyzing the coconut kernels. For example, the hydrolyzed coconut kernels may be liquefied by enzymatic treatment. Liquefaction may be the process of rendering solid components liquid by their partial or total enzymatic hydrolysis. Thermostable enzymes may be used as this process may be carried out at elevated temperatures. Partial hydrolysis not only reduces viscosity but may also prevent retrogradation upon further cooling.

The hydrolyzed and liquefied coconut kernels may be spray dried, for example by an industrial or semi-industrial spray dryer. Spray drying is a preferred drying process when it comes to drying large industrial quantities of an aqueous slurry into a powder in an economic way. Preferably, spray drying is done at a temperature from 110°C to 180°C. This allows on one hand to efficiently dry the composition into a powder, and on the other hand not to overheat the composition in order to prevent or minimize burning and other deteriorating effects such as undesired Maillard reactions.

Those skilled in the art will understand that they can freely combine all features of the present invention disclosed herein. In particular, features described for the product of the present invention may be combined with the use of the present invention and vice versa. Further, features described for different embodiments of the present invention may be combined. In particular, features described with respect to the product of the present invention may be combined with the process of the present invention and vice versa.

Although the invention has been described by way of example, it should be appreciated that variations and modifications may be made without departing from the scope of the invention as defined in the claims.

Furthermore, where known equivalents exist to specific features, such equivalents are incorporated as if specifically referred in this specification. Further advantages and features of the present invention are apparent from the figures and examples.

### Examples:

### Example 1: Preparation of a product in accordance with the present invention

Dehusking of coconuts exocarp, mesocarp and endocarp was carried out, followed by testa removal. The resulting coconut kernels were subsequently grated to a size of 1-2 cm and a thickness of 1-1.5 mm. The grated coconuts (40 kg) were then transferred to a Scanima mixer (TetraPak, Singapore) under agitation at 50% and 30% shear. Direct steam injection was applied for 5 minutes to heat the coconut mass up to 60°C. Subsequently, 106 grams of FoodPro^{®} CBL (Dupont-Danisco, NY, United States; enzyme combination of beta gluconase, xylanase and cellulase) and 106 grams of Rohalase^{®} GMP (AB Enzymes, Darmstadt, Germany; enzyme mannase) were respectively added to the grated coconut mass. After 30 minutes incubation at 60°C, 550 grams of sodium caseinate (Friesland Campina, Netherlands) and 28 grams of trisodium phosphate were added to the slurry. Incubation at 60°C for 50 minutes under 50% agitation and 30% shear enabled complete liquefaction of the coconut solids. The hydrolyzed coconut kernels were then homogenized at 250 bars and heat treated in a tubular heat exchanger for 20 seconds at 90°C. Subsequently, the slurry was spray dried on an Egron line, resulting in a coconut milk powder.

### Example 2: Sensory evaluation and comparison versus prior art compositions

For the coconut milk-flour slurry preparation in accordance with the prior art, coconut milk was first heated at 55°C to obtain a homogeneous solution. Subsequently, Na-caseinate, trisodium phosphate and coconut flour were incorporated with the help of a polytron mixer. The resulting slurry was heat treated at 75°C for 30 minutes. Total Solid content (TS) of the mixture was 40%.

Enzymatically hydrolyzed grated coconuts in accordance with the present invention were produced as described above.

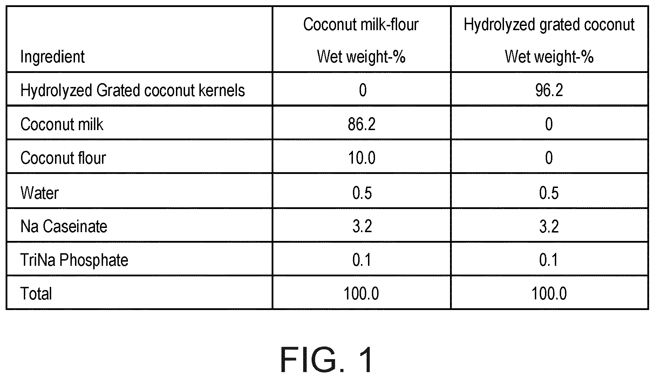

The final composition of both preparations is presented in Table 1 of Figure 1.

Those two preparations were subjected to a sensory panel of 8 persons. Comparative profiling was applied to this study, where panellists evaluated the differences between the two samples on a 0 to 4 scale. The participants of the sensory panel were served with 30 ml of each sample and asked to compare them regarding their appearance, aroma, flavor and texture.

The panellists described the coconut milk-flour beverage of the prior art to be extensively grittier and sandier, as compared to hydrolyzed grated coconuts in accordance with the present invention, as shown by the difference in texture of 4. Additionally, hydrolyzed grated coconut in accordance with the present invention were perceived as smoother in the mouth. Perceived aromas were similar. In terms of flavors, the hydrolyzed beverage in accordance with the present invention was perceived as sweeter than the coconut milk and flour slurry of the prior art.

### Example 3: Viscosity and particle size

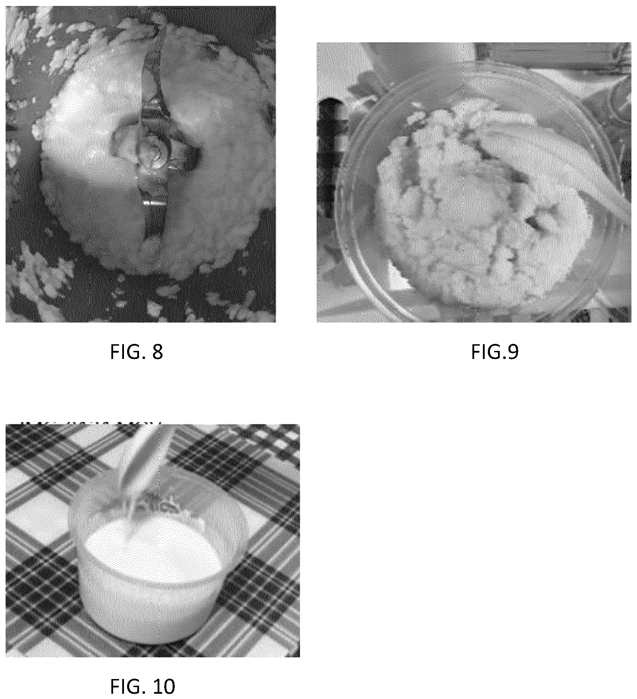

The viscosity and particle size of the product in accordance with the present invention was assessed. These parameters such as viscosity, TS and PSD may play a key role when spray drying the composition. Before spray drying the tested product of the present invention had a viscosity of 50 - 200 cP (0.05 - 0.2 Pa·s) at 65°C and a TS of 35-45%. FIG. 10 shows a picture of the hydrolyzed grated coconuts before spray drying.

### Example 4: Further comparison examples using only FoodPro^{®} or Rohalase^{®}

Enzymatically hydrolyzed grated coconuts were produced as described in example 1 with the difference that only FoodPro^{®} CBL (Dupont-Danisco, NY, United States; enzyme combination of beta gluconase, xylanase and cellulase) or Rohalase^{®} GMP (AB Enzymes, Darmstadt, Germany; enzyme mannase) has been used instead of a combination of FoodPro^{®} and Rohalase^{®}. In this case the obtained viscosity is too high for spray drying the obtained hydrolyzed grated coconuts as it is shown in FIG.8 and FIG. 9.

## Claims

1. A process for making a dried coconut powder comprising the steps of:
- enzymatically hydrolyzing grated coconut kernels;
- liquefying the coconut kernels; and
- spray drying the hydrolyzed and liquefied coconut kernels;
wherein the enzymatic hydrolysis is carried out by an enzyme selected from a combination of cellulases, mannanases, beta-glucanases and xylanases.

2. The process according to claim 1, wherein the enzymatic hydrolysis is carried out by an amount of 0.1% weight to 8 weight-% , preferably from 0.3 to 2 weight-% on a wet basis of an enzyme selected from a combination of cellulases, mannanases, beta-glucanases, and xylanases.

3. The process according to one of claims 1 - 2, wherein the enzyme is deactivated after the hydrolysis by thermal treatment.

4. The process according to one of claims 1 - 3, wherein hydrolyzed coconut kernels are liquefied by enzymatic treatment.

5. The process according to one of claims 1 - 4, wherein the hydrolyzed and liquefied coconut kernels are spray dried by an industrial or semi-industrial spray dryer.

6. The process according to one of claims 1 - 5, wherein the dried coconut powder is free from maltodextrin and/or starch.

7. The process according to one of claims 1 - 6, wherein the grated coconut kernels are unprocessed grated coconut kernels.

8. The process according to one of claims 1 - 7, wherein the dried coconut powder has a particle size distribution measured according to ISO 13320:2009 after hydrolysis of 1 to 1000 µm.

9. The process according to one of claims 1 - 8, wherein the dried coconut powder has a coconut fat dry weight content from 25-85 weight-%, preferably from 35-75 weight-%, more preferably from 55-70 weight-%; a protein dry weight content in the range of 1 weight-% to 10 weight-%, preferably from 3 to 9 weight-% and a coconut fiber dry weight content from 1 to 10 weight-%, preferably from 2 to 6 weight-%.

10. The process according to one of claims 1- 9, wherein the fiber present in the dried coconut powder comprises at least 90 weight-% soluble fiber, preferably 95 weight-%.

11. The process according to one of claims 1 - 10, wherein the dried coconut powder comprises fiber only from coconut.

12. The process according to one of claims 1 - 11, wherein the dried coconut powder has a moisture content in the range of 0.40 weight-% to 10 weight-%.

13. The process according to one of claims 1 - 12, wherein the dried coconut powder comprises at least 90 weight-% coconut, at least 95 weight-% coconut, at least 98 weight-% coconut, or consists of coconut.

## Patentansprüche

1. Verfahren zum Herstellen eines getrockneten Kokospulvers, umfassend die Schritte:
- enzymatisches Hydrolysieren geriebener Kopra;
- Verflüssigen der Kopra; und
- Sprühtrocknen der hydrolysierten und verflüssigten Kopra;
wobei die enzymatische Hydrolyse durch ein Enzym vorgenommen wird, das aus einer Kombination von Cellulasen, Mannanasen, Beta-Glucanasen und Xylanasen ausgewählt ist.

2. Verfahren nach Anspruch 1, wobei die enzymatische Hydrolyse mit einer Menge von zu 0,1 Gew.-% bis 8 Gew.-%, vorzugsweise von zu 0,3 bis 2 Gew.-%, auf einer Nassbasis eines Enzyms vorgenommen wird, das aus einer Kombination von Cellulasen, Mannanasen, Beta-Glucanasen und Xylanasen ausgewählt ist.

3. Verfahren nach einem der Ansprüche 1 bis 2, wobei das Enzym nach der Hydrolyse durch Wärmebehandlung deaktiviert wird.

4. Verfahren nach einem der Ansprüche 1 bis 3, wobei hydrolysierte Kopra durch enzymatische Behandlung verflüssigt wird.

5. Verfahren nach einem der Ansprüche 1 bis 4, wobei die hydrolysierte und verflüssigte Kopra durch einen industriellen oder halbindustriellen Sprühtrockner sprühgetrocknet wird.

6. Verfahren nach einem der Ansprüche 1 bis 5, wobei das getrocknete Kokospulver frei von Maltodextrin und/oder Stärke ist.

7. Verfahren nach einem der Ansprüche 1 bis 6, wobei die geriebene Kopra unverarbeitete geriebene Kopra ist.

8. Verfahren nach einem der Ansprüche 1 bis 7, wobei das getrocknete Kokospulver eine Partikelgrößenverteilung gemessen gemäß ISO 13320:2009 nach der Hydrolyse von 1 bis 1000 µm aufweist.

9. Verfahren nach einem der Ansprüche 1 bis 8, wobei das getrocknete Kokospulver einen Kokosfetttrockengewichtsgehalt von zu 25-85 Gew.-%, vorzugsweise von zu 35-75 Gew.-%, mehr bevorzugt von zu 55-70 Gew.-%; einen Proteintrockengewichtsgehalt in dem Bereich von zu 1 Gew.-% bis 10 Gew.-%, vorzugsweise von zu 3 bis 9 Gew.-%und einen Kokosfasertrockengewichtsgehalt von zu 1 bis 10 Gew.-%, vorzugsweise von zu 2 bis 6 Gew.-% aufweist.

10. Verfahren nach einem der Ansprüche 1 bis 9, wobei die Ballaststoffe, die in dem getrockneten Kokospulver enthalten sind, mindestens zu 90 Gew.-%, vorzugsweise zu 95 Gew.-%, lösliche Ballaststoffe umfassen.

11. Verfahren nach einem der Ansprüche 1 bis 10, wobei das getrocknete Kokospulver nur Fasem aus Kokosnuss umfasst.

12. Verfahren nach einem der Ansprüche 1 bis 11, wobei das getrocknete Kokospulver einen Feuchtigkeitsgehalt in dem Bereich von zu 0,40 Gew.-% bis 10 Gew.-% aufweist.

13. Verfahren nach einem der Ansprüche 1 bis 12, wobei das getrocknete Kokospulver mindestens zu 90 Gew.-% Kokosnuss, mindestens zu 95 Gew.-% Kokosnuss, mindestens zu 98 Gew.-% Kokosnuss umfasst oder aus Kokosnuss besteht.

## Revendications

1. Procédé de préparation d'une poudre de noix de coco séchée comprenant les étapes consistant à :
- hydrolyser de manière enzymatique des amandes de noix de coco râpées ;
- liquéfier les amandes de noix de coco ; et
- sécher par atomisation les amandes de noix de coco hydrolysées et liquéfiées ;
dans lequel l'hydrolyse par voie enzymatique est réalisée par une enzyme choisie parmi une combinaison de cellulases, de mannanases, de bêta-glucanases et de xylanases.

2. Procédé selon la revendication 1, dans lequel l'hydrolyse enzymatique est réalisée par une quantité de 0,1 % en poids à 8 % en poids, de préférence de 0,3 à 2 % en poids, sur une base humide d'une enzyme choisie parmi une combinaison de cellulases, mannanases, bêta-glucanases et xylanases.

3. Procédé selon l'une des revendications 1 à 2, dans lequel l'enzyme est désactivée après l'hydrolyse par traitement thermique.

4. Procédé selon l'une des revendications 1 à 3, dans lequel les amandes de noix de coco hydrolysées sont liquéfiées par traitement enzymatique.

5. Procédé selon l'une des revendications 1 à 4, dans lequel les amandes de noix de coco hydrolysées et liquéfiées sont séchées par pulvérisation dans un séchoir à pulvérisation industriel ou semi-industriel.

6. Procédé selon l'une des revendications 1 à 5, dans lequel la poudre de noix de coco séchée est exempte de maltodextrine et/ou d'amidon.

7. Procédé selon l'une des revendications 1 à 6, dans lequel les amandes de noix de coco râpées sont des amandes de noix de coco râpées non transformées.

8. Procédé selon l'une des revendications 1 à 7, dans lequel la poudre de noix de coco séchée présente une distribution granulométrique mesurée selon la norme ISO 13320:2009 après hydrolyse de 1 à 1000 µm.

9. Procédé selon l'une des revendications 1 à 8, dans lequel la poudre de noix de coco séchée a une teneur en poids sec de graisse de coco de 25 à 85 % en poids, de préférence de 35 à 75 % en poids, plus préférablement de 55 à 70 % en poids ; une teneur en protéines en poids sec comprise dans la plage allant de 1 à 10 % en poids, de préférence de 3 à 9 % en poids, et une teneur en fibres de coco en poids sec allant de 1 à 10 % en poids, de préférence de 2 à 6 % en poids.

10. Procédé selon l'une des revendications 1 à 9, dans lequel les fibres présentes dans la poudre de noix de coco séchée comprennent au moins 90 % en poids de fibres solubles, de préférence 95 % en poids.

11. Procédé selon l'une des revendications 1 à 10, dans lequel la poudre de noix de coco séchée comprend uniquement des fibres de noix de coco.

12. Procédé selon l'une des revendications 1 à 11, dans lequel la poudre de noix de coco séchée a une teneur en humidité comprise dans la plage allant de 0,40 % en poids à 10 % en poids.

13. Procédé selon l'une des revendications 1 à 12, dans lequel la poudre de noix de coco séchée comprend au moins 90 % en poids de noix de coco, au moins 95 % en poids de noix de coco, au moins 98 % en poids de noix de coco, ou est constituée de noix de coco.
